# FASCICULE DE BREVET EUROPEEN

(11) **EP 3 215 248 B1**
(45) Date de publication et mention de la délivrance du brevet: **29.08.2018**
(21) Numéro de dépôt: 15790964.9
(22) Date de dépôt: 06.11.2015
(51) Int. Cl.: B01D 17/02, E02B 15/10

(54) **DISPOSITIF D'ECREMAGE D'UN FLUIDE DE SURFACE**
VORRICHTUNG ZUM ABSCHÖPFEN VON OBERFLÄCHENFLÜSSIGKEIT
DEVICE FOR SKIMMING OFF A SURFACE FLUID

(30) Priorité: 07.11.2014 FR 1402578
(43) Date de publication de la demande: 13.09.2017
(73) Titulaire: Technip France, 92400 Courbevoie (FR)
(72) Inventeur: DAVIN, Michel, F-76480 Berville sur Seine (FR)
(74) Mandataire: Lavoix
(86) Numéro de dépôt international: PCT/EP2015/075986
(87) Numéro de publication internationale: WO 2016/071517

(56) Documents cités:
- DE-A1- 1 634 091
- FR-A1- 2 452 549
- NL-A- 7 713 456
- US-A- 3 675 771
- US-A- 4 405 458
- US-A- 4 998 585
- US-A- 5 366 629
- US-A1- 2008 251 441

## Description

La présente invention concerne un dispositif pour opération d'écrémage de réservoirs de stockage ou de process de fluides pétroliers ou chimiques ainsi qu'un procédé d'écrémage associé à l'utilisation du dispositif, selon le préambule de la revendication 1.

Il est connu de l'état de la technique d'utiliser des dispositifs d'écrémage aussi appelés récupérateurs (ou « skimmers » en langue anglaise) pour venir ôter un fluide de faible densité étendu à la surface d'un autre fluide de densité plus importante ou fluide principal. Le fluide principal est par exemple un fluide pétrolier ou chimique contenu dans un réservoir ou par digression, une grande étendue liquide telle qu'un océan.

Le fluide de faible densité est généralement un fluide que l'on souhaite séparer du fluide principal pour ensuite l'évacuer puis le stocker dans un réservoir annexe en vue d'une utilisation ultérieure ou en vue d'un traitement ultérieur de dépollution pour le rendre moins nocif pour l'être humain et/ou pour le recycler. Le fluide de faible densité peut également être une mousse ou un polluant que l'on souhaite séparer du fluide principal puis évacuer vers un tout-à-l'égout spécifique.

Parmi les dispositifs d'écrémage existants, celui décrit dans la demande française FR 2 452 549 comporte un déversoir destiné à recueillir le fluide de surface et une cuve destiné à évacuer ledit fluide vers un réservoir de stockage. Le fluide de surface est envoyé vers la cuve lorsque se produit une lame déversante au niveau du seuil du déversoir. Un inconvénient de ce dispositif est qu'il ne permet pas de recueillir avec précision, le seul fluide de surface. En effet, tant que l'épaisseur de la couche de fluide située en surface est relativement importante, le dispositif peut l'écrémer sans difficultés. En revanche, dès lors que l'interface entre le fluide de surface et le fluide principal devient trop faible, le dispositif écrèmera aussi bien le fluide de surface que le fluide principal.

De la même manière, mais dans le cas d'une utilisation en milieu offshore marin, le dispositif de récupération d'une couche de surface huileuse décrit par le brevet américain US 3,745,115 permet par la présence de trous ménagés dans l'ossature externe de sa structure, de recueillir puis d'évacuer un mélange eau de mer-huile. En l'espèce, ce dispositif ne permet pas de recueillir et d'évacuer uniquement la couche huileuse présente à la surface de l'eau de mer.

Aussi, une fois l'opération d'écrémage terminée, ces dispositifs ne peuvent prévenir et/ou interdire un écrémage accidentel ou intempestif d'un certain volume de fluide principal.

Dans la demande de brevet néerlandaise NL 7 713 456, le dispositif d'écrémage divulgué comprend une soupape activable en fonction de la hauteur du fluide de surface en présence dans la cuve de stockage de fluides.

En outre, la grande majorité des récupérateurs utilisés dans le traitement des cuves de stockage sont maintenus en position à l'aide d'un ou plusieurs poteaux de guidage (ou « guiding posts » en langue anglaise) installés à demeure dans la cuve.

Ces poteaux de guidage ont comme inconvénients d'être encombrants et non amovibles. Leur utilisation ne peut donc être envisagée pour des cuves à toit flottant, cuves dont la hauteur est destinée à varier suivant les volumes de fluides en présence à l'intérieur.

Aussi, ces poteaux de guidage ont pour but de stabiliser horizontalement et verticalement le récupérateur lorsque celui-ci repose sur la couche de fluide de surface.

Cependant, lorsque la stabilisation du récupérateur est par exemple réalisée à l'aide d'une liaison mécanique de type rotule, linéaire rectiligne ou encore à l'aide d'un raccord flexible, il peut se produire une déstabilisation et partant un blocage du dispositif lors de l'opération d'écrémage.

La présente invention vise à remédier en tout ou partie aux inconvénients préalablement précités et concerne un dispositif selon la revendication 1.

Ainsi, une telle caractéristique selon l'invention permet un meilleur contrôle de l'opération d'écrémage de la couche de fluide étendue à la surface de l'autre fluide de densité plus élevée.

Le dispositif d'écrémage selon l'invention peut comprendre l'une ou plusieurs des caractéristiques suivantes, prises isolément ou suivant toute combinaison techniquement possible :
- avantageusement, les au moins deux conduites flexibles sont agencées dans une configuration en « lanterne chinoise ». Ainsi, on améliore la stabilité horizontale et verticale du dispositif d'écrémage.
- Il comporte un moyen de réglage de la hauteur d'écrémage du fluide de surface de densité d1 par rapport à l'interface entre les fluides de densité d1 et d2 fixé au niveau de l'ouverture des moyens de collecte. Ainsi, l'écrémage du fluide de surface est rendu plus fiable et on évite la collecte du fluide principal.
- le moyen de réglage est fixé sur une surface externe des moyens de collecte.
- le moyen de réglage est fixé sur une surface interne des moyens de collecte.
- avantageusement, le dispositif comporte un moyen d'obturation de l'ouverture des moyens de collecte. Ainsi, on améliore encore un peu plus la fiabilité de l'opération d'écrémage.
- le moyen d'obturation comprend un flotteur de diamètre supérieur au diamètre de l'ouverture des moyens de collecte flottant sur la surface du fluide de densité d1 et un élément de guidage fixé sous le flotteur apte à coopérer avec les moyens de collecte et à coulisser verticalement à l'intérieur de l'ouverture en suivant les variations de hauteur du fluide de surface lors de l'opération d'écrémage.
- l'élément de guidage du moyen d'obturation comporte des ouvertures pour collecter le fluide de surface de densité d1 à écrémer.

L'invention se rapporte également au procédé d'écrémage selon la revendication 8

Le procédé d'écrémage du réservoir peut comprendre la caractéristique suivante :
- après l'étape c), le flotteur repose sur l'ouverture des moyens de collecte.

L'invention concerne également un dispositif pour opération d'écrémage de réservoirs de stockage de fluides pétroliers ou chimiques fonctionnant par gravitation comprenant :
- des moyens de séparation comportant :
- un corps supérieur surmonté d'un premier moyen de flottaison ;
- un corps inférieur équipé d'un second moyen de flottaison et présentant une extrémité supérieure ;
le corps supérieur étant apte à coulisser par rapport au corps inférieur, entre une position initiale et une position terminale ;
- des moyens d'évacuation connectés au corps inférieur des moyens de séparation,
caractérisé en ce que le premier moyen de flottaison est en contact permanent avec l'extrémité supérieure du corps inférieur quand le corps supérieur, après coulissement, est dans la position terminale.

En outre, l'invention peut comprendre l'une ou plusieurs des caractéristiques suivantes :
- avantageusement, le corps supérieur des moyens de séparation est perforé sur une certaine portion. De préférence, l'ensemble du corps supérieur est perforé.
- l'extrémité supérieure du corps inférieur des moyens de séparation comprend une portion en saillie. De manière avantageuse, la portion en saillie possède une surface de forme frusto-conique.
- un élément de protection est vissé sur l'extrémité supérieure du corps inférieur des moyens de séparation.
- l'élément de protection est vissé sur la surface interne de l'extrémité supérieure.
- en variante, l'élément de protection est vissé sur la surface externe de l'extrémité supérieure.
- l'élément de protection est muni d'une pièce semi-circulaire formant bourrelet.
- les moyens d'évacuations du dispositif d'écrémage comprennent au moins deux conduites flexibles.
- les au moins deux conduites flexibles sont installées dans une configuration dite en « lanterne chinoise ». Ainsi la stabilité générale du dispositif est améliorée.

L'invention sera mieux comprise à la lueur de la description qui va suivre, en référence aux dessins annexés dans lesquels :
- la Figure 1 est une vue schématique partielle du dispositif d'écrémage selon l'invention ;
- la Figure 2 est une vue schématique partielle d'une variante de réalisation du dispositif de la Figure 1 ;
- la Figure 3 est une vue schématique d'un système de surveillance selon un premier mode de fonctionnement ;
- la Figure 4 est une vue schématique du système de surveillance selon un deuxième mode de fonctionnement ;
- la Figure 5 est une vue schématique du dispositif selon l'invention dans une première position d'écrémage ;
- la Figure 6 est une vue schématique du dispositif de la Figure 5 dans une deuxième position d'écrémage ;
- la Figure 7 est une vue schématique du dispositif de la Figure 5 dans une troisième position.

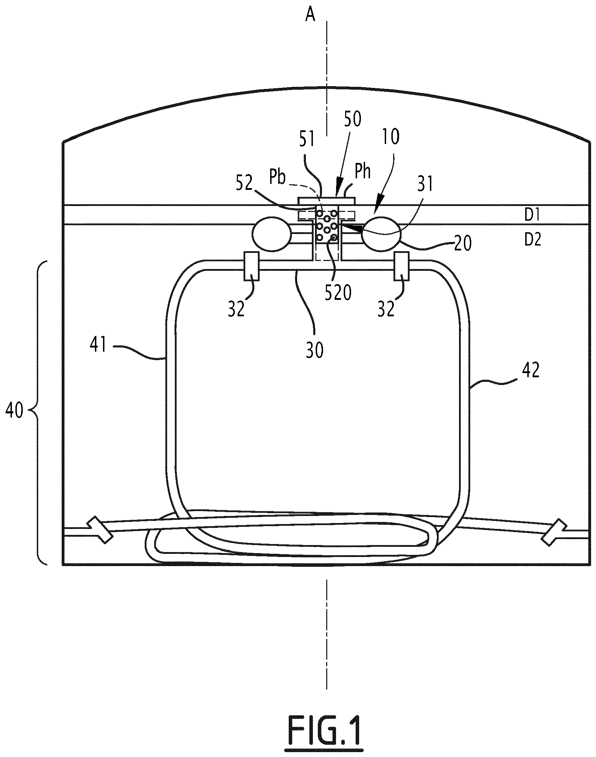

Sur la Figure 1 est illustrée un réservoir de stockage ou de process d'un fluide pétrolier ou chimique de densité d2 au-dessus duquel est visible une couche d'un fluide de surface de densité d1 ainsi qu'un dispositif 10 d'écrémage destiné à ôter la couche de densité d1 et à l'évacuer vers l'extérieur du réservoir. Le fluide écrémé peut ensuite être stocké dans une cuve ou réservoir annexe en vue d'un recyclage ultérieur ou bien envoyé vers un tout-à-l'égout spécifique.

Le dispositif 10 comprend des moyens de flottaison 20 qui lui permettent de flotter dans le fluide de densité d2, à proximité de l'interface entre le fluide de surface de densité d1 et le fluide pétrolier ou chimique de densité d2.

Les moyens de flottaison 20 sont par exemple réalisés sous la forme d'un élément de géométrie quelconque. Mais de préférence, ils sont réalisés sous la forme de deux éléments de forme géométrique quelconque espacés angulairement par un angle de 180° autour d'un axe vertical central A du dispositif 10. Les deux éléments sont ainsi symétriques axialement par rapport à l'axe vertical A. Partant, on améliore la stabilité du dispositif 10 d'écrémage au niveau de son plan de flottaison situé à proximité de l'interface entre les fluides de densité d1 et d2.

Les éléments constituant les moyens de flottaison 20 peuvent être réalisés à partir d'un matériau de densité plus élevée que celle du fluide de surface, tel que par exemple une mousse syntactique.

Les éléments constituant les moyens de flottaison 20 peuvent également être des flotteurs de volume variable selon que l'on souhaite se rapprocher ou s'éloigner de l'interface entre le fluide de densité d1 et le fluide de densité d2. Ces flotteurs sont par exemple des réservoirs tels que des bidons métalliques en aluminium ou en acier inoxydable. En particulier, les flotteurs s'étendent ici parallèlement l'un à l'autre de part et d'autre de l'axe vertical A.

Les moyens de flottaison 20 sont dimensionnés en fonction de la nature du fluide principal de densité d2, plus précisément en fonction de sa densité.

Le dispositif comprend en outre des moyens de collecte 30 reliés aux moyens de flottaison 20. Les moyens de collecte 30 permettent de collecter le fluide de surface de densité d1 à écrémer.

Les moyens de collecte 30 comportent une ouverture 31 débouchant à proximité de l'interface entre les deux fluides de densité respectives d1 et d2, au-dessus de cet interface, dans le fluide de densité d1.

Les moyens de collecte 30 comportent également des moyens de connexion 32 immergés dans le fluide principal de densité d2.

Avantageusement, l'ouverture 31 comprend une portion en saillie. La portion en saillie joue un rôle important pendant le fonctionnement du dispositif 10 d'écrémage puisqu'elle permet d'éviter que le fluide de densité d2 ne soit recueilli par les moyens de collecte 30. Ainsi, l'opération d'écrémage est rendue plus fiable.

La portion en saillie forme un angle droit avec les moyens de collecte 30 du dispositif 10. La portion en saillie peut par exemple prendre la forme d'une collerette .

En variante, la portion en saillie est évasée par rapport au moyen de collecte 30. Elle présente par exemple une géométrie frusto-conique.

Enfin, le dispositif 10 comprend des moyens d'évacuation 40 du fluide de surface connectés aux moyens de connexion 32 des moyens de collecte 30. Les moyens d'évacuation 40 s'étendent verticalement dans le fluide principal de densité d2, depuis les moyens de connexion 32 vers la partie basse du réservoir. Les moyens d'évacuation 40 sont connectés à au moins une sortie ménagée dans la partie basse du réservoir de stockage, sur sa paroi ou directement sur le fond. La au moins une sortie ménagée dans le réservoir est elle-même reliée à un réservoir annexe ou à un tout-à-l'égout spécifique (non représenté).

Les moyens d'évacuation 40 fonctionnent par gravité, ce qui signifie que le fluide de densité d1 à écrémer s'écoule sans l'aide d'une pompe, depuis le haut du réservoir de stockage au travers du dispositif 10 vers le réservoir annexe situé à l'extérieur.

Les moyens d'évacuation 40 comprennent au moins deux conduites flexibles 41,42 connectées symétriquement aux moyens de connexion 32 du dispositif 10. Ainsi, par répartition symétrique des efforts, on améliore la stabilité horizontale du dispositif 10 d'écrémage.

Les au moins deux conduites flexibles 41,42 sont de petit diamètre. Le diamètre est compris entre 3 pouces (7.62 centimètres) et 12 pouces (30,48 centimètres).

Les au moins deux conduites flexibles 41,42 sont de préférence des conduites flexibles utilisées pour les opérations de raffinage, aussi dénommées DRAPS (ou « Drilling and Refining Application Pipes » en langue anglaise), fabriquées et vendues par la Demanderesse. Ce type de conduite flexible possède une structure particulière puisque la couche externe de leur structure est une carcasse métallique en acier formée par l'enroulement de plusieurs feuillards agrafés entre eux.

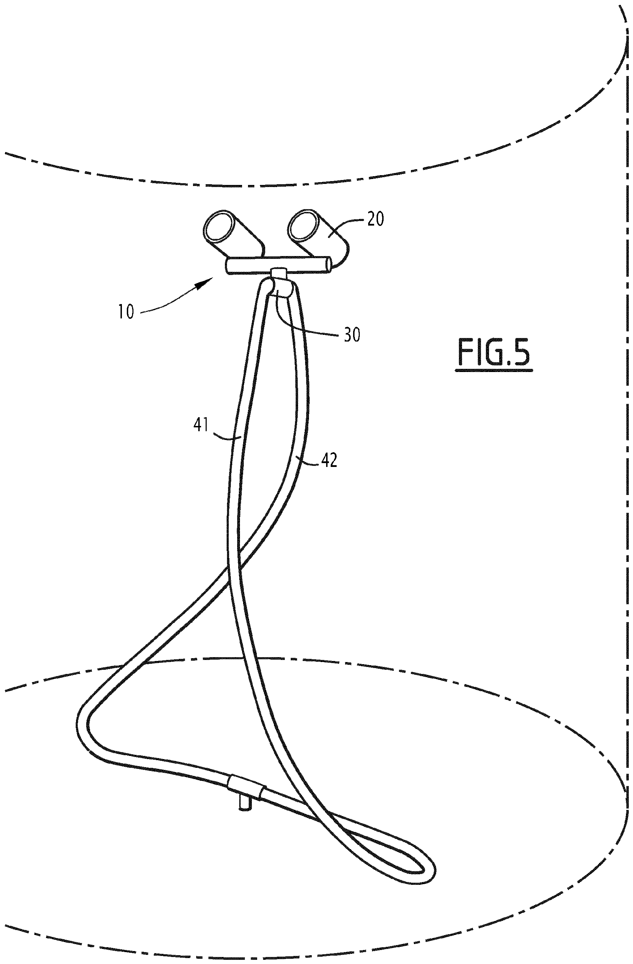

Avantageusement, les conduites 41,42 sont agencées selon une configuration en « lanterne chinoise » (ou « chinese lantern » en langue anglaise). Dans ce type de configuration, les conduites 41,42 connectées aux moyens de connexion 32 décrivent des trajectoires descendantes hélicoïdales symétriques par rapport à l'axe vertical A en allant vers la au moins une sortie ménagée dans le fond du réservoir, tel qu'illustré sur les Figures 5 à 7.

Les Figures 5 à 7 permettent d'illustrer les avantages procurés par la configuration en « lanterne chinoise » des conduites flexibles 41,42 vis-à-vis du dispositif 10 d'écrémage.

La Figure 5 illustre de façon schématique le dispositif 10 d'écrémage de l'invention à l'intérieur d'un réservoir de stockage de fluides pétroliers ou chimiques, dans une première position d'écrémage. Dans la première position, la hauteur du fluide principal de densité d2 dans le réservoir est importante. Les conduites 41,42 sont connectées symétriquement par rapport à l'axe vertical A aux moyens de connexion 32 des moyens de collecte 30, de part et d'autre des moyens de connexion 32. Les conduites 41, 42 s'étendent vers le fond du réservoir selon une trajectoire descendante hélicoïdale. Cette trajectoire apporte une symétrie au dispositif autour de l'axe central A et lui assure un bon équilibre, une bonne flottabilité. Grâce à cette configuration, on s'affranchit de l'utilisation d'éléments complémentaires de guidage et/ou de support tels qu'un poteau métallique fixé verticalement dans la cuve pour guider le dispositif ou encore une longe pour maintenir stable horizontalement et verticalement les moyens d'évacuation, comme décrit dans la brochure Floated Oil Skimmer éditée par la société ATECO.

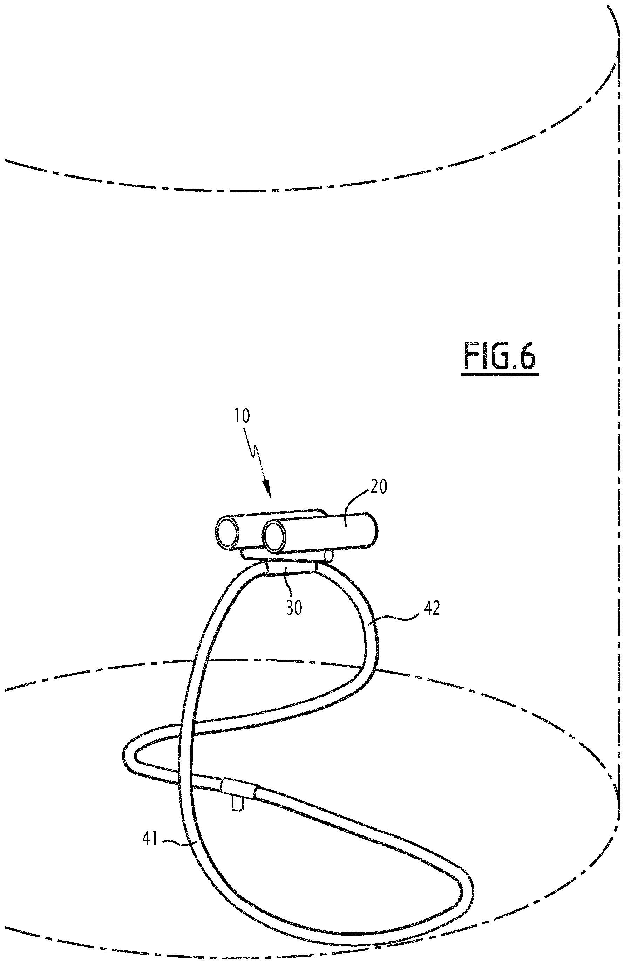

Sur la Figure 6, le dispositif 10 est dans une deuxième position d'écrémage. Dans cette deuxième position, la hauteur du fluide principal de densité d2 dans le réservoir est plus basse, entraînant le repos des conduites flexibles 41,42 sur le fond du réservoir. Comme on peut l'observer, une certaine longueur des conduites 41,42 repose de manière symétrique sur le fond du réservoir. De plus, l'encombrement des conduites 41,42 sur le fond du réservoir est contrôlé et est contenu dans une surface au sol réduite. Cela est dû aux trajectoires formées par les conduites flexibles 41,42 dans le réservoir allié à leur flexibilité. Même avec une diminution de hauteur du fluide principal, la symétrie des conduites 41,42 par rapport à l'axe A est préservée et le dispositif 10 d'écrémage conserve une bonne flottabilité.

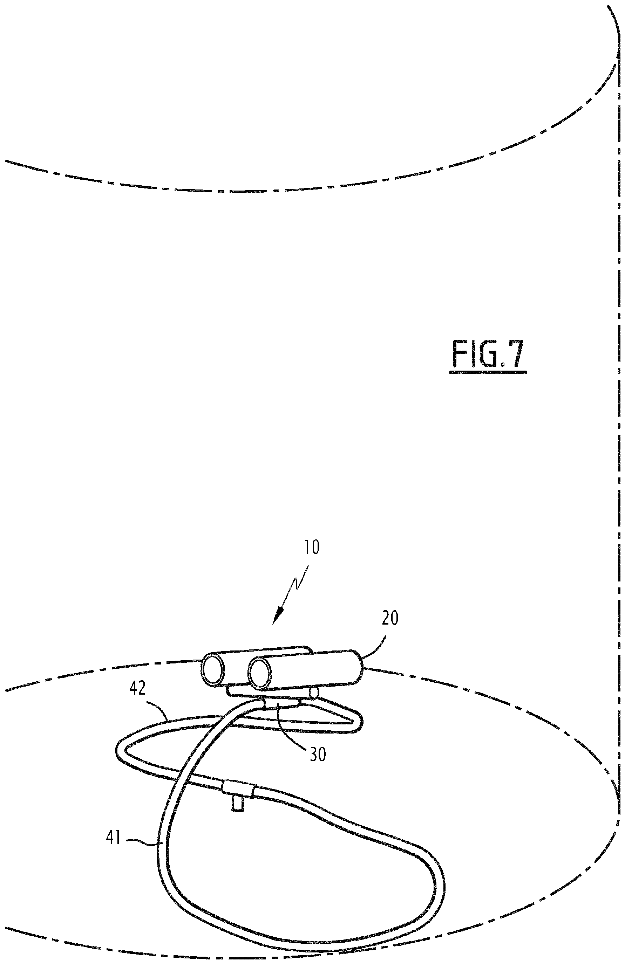

Sur la Figure 7, le dispositif 10 est dans une troisième position d'écrémage. Dans cette troisième position, la hauteur du fluide principal de densité d2 dans le réservoir est encore un peu plus basse que celle illustrée à la Figure 6, entraînant le repos d'une plus grande longueur des conduites flexibles 41,42 sur le fond du réservoir. Là encore, la symétrie du dispositif 10 par rapport à l'axe central A est préservée tout comme la flottabilité du dispositif 10. Aussi, l'encombrement des conduites 41,42 sur le fond du réservoir est toujours contrôlé et reste contenu dans une surface au sol réduite.

Les moyens de flottaison 20 assurent la flottabilité du dispositif 10 et reprennent le poids des conduites 41,42. Les moyens de flottaison 20, les moyens de collecte 30 et les moyens de connexion 32 sont entraînés exclusivement par les conduites 41, 42, qui les guident lors de leur descente le long de l'axe vertical.

Dans une variante de réalisation préférée de l'invention, le dispositif 10 d'écrémage comporte un moyen d'obturation 50 des moyens de collecte 30. Le moyen d'obturation 50 comprend un flotteur 51 ainsi qu'un élément de guidage 52 fixé sous le flotteur 51. Le flotteur 51 flotte sur la surface de la couche du fluide de surface de densité d1, au niveau de l'interface entre le fluide de densité d1 et l'atmosphère environnante régnant à l'intérieur du réservoir de stockage. L'atmosphère environnante est généralement un gaz inerte tel que de l'azote (N2).

Le flotteur 51 possède de préférence un diamètre supérieur au diamètre de l'ouverture 31 des moyens de collecte 30.

L'élément de guidage 52 est apte à coopérer avec les moyens de collecte 30 et à coulisser verticalement à l'intérieur de l'ouverture 31 en suivant les variations de hauteur du fluide de surface lors de l'opération d'écrémage.

Le moyen d'obturation 50, plus précisément le flotteur 51 et l'élément de guidage 52 présentent une forme cylindrique mais l'un comme l'autre peuvent tout à fait adopter une forme géométrique quelconque.

En revanche, il est important que la géométrie de l'élément de guidage 52 soit complémentaire de la géométrie de l'ouverture 31 des moyens de collecte 30 pour qu'ils puissent coopérer l'un avec l'autre.

Avantageusement, des moyens de retenue (non représentés) sont prévus sur les moyens de collecte 30 et sur le moyen d'obturation 50 afin d'empêcher une éjection totale de ce dernier hors des moyens de collecte 30.

A cet effet, une collerette est prévue au niveau de l'extrémité inférieure de l'élément de guidage 52 et un épaulement est prévu au niveau de l'extrémité supérieure des moyens de collecte 30, à proximité de l'ouverture 31.

Ainsi, l'épaulement forme une butée pour la collerette dans le cas où l'élément de guidage 52 venait à coulisser de manière extrême jusqu'à risquer l'éjection hors des moyens de collecte 30.

De manière avantageuse, l'élément de guidage 52 du moyen d'obturation 50 comprend des ouvertures 520 pour collecter le fluide de surface à écrémer. Les ouvertures 520 sont par exemple des orifices ménagés dans l'élément 52 ou encore des rainures ménagés sur la surface externe de l'élément 52.

Les ouvertures 520 sont prévues sur une certaine hauteur de l'élément de guidage 52. Mais de préférence, l'ensemble de l'élément de guidage 52 est pourvu d'ouvertures 520.

Le coulissement est prépondérant dans le fonctionnement du dispositif 10 car il permet au moyen d'obturation 50 de rester au contact du fluide de surface et de suivre les variations d'épaisseur de ce fluide lors de l'opération d'écrémage.

Ainsi, la séparation des fluides de densité d1 et d2 s'en trouve améliorée car l'écrémage du fluide de surface est plus précis.

La caractéristique selon laquelle l'élément de guidage 52 peut coulisser par rapport aux moyens de collecte représente d'autant plus un avantage pour améliorer l'écrémage de la couche de fluide de surface que les densités d1 et d2 sont à peu près égales.

Le moyen d'obturation 50 est réalisé à partir d'un matériau de densité nettement plus faible que la densité d1 de façon à obtenir un ensemble mobile flottant. Par exemple, le matériau peut être sélectionné parmi les mousses syntactiques ou les matériaux métalliques tels que l'aluminium et les aciers inoxydables.

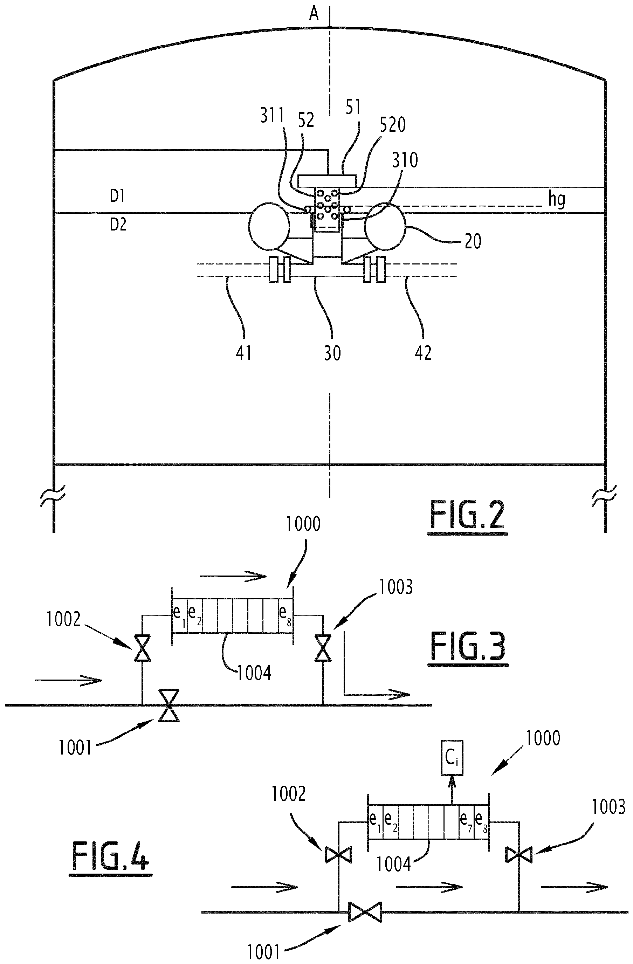

Dans un autre mode de réalisation de l'invention telle que représentée en Figure 2, l'ouverture 31 des moyens de collecte 30 ne comprend pas de portion en saillie.

En revanche, les moyens de collecte 30 comportent un moyen de réglage 310 fixé au niveau de l'ouverture 31. La surface externe des moyens de collecte 30 comporte un filetage permettant la fixation et par suite le réglage du moyen de réglage 310.

Le moyen de réglage 310 permet d'établir un niveau de garde ou hauteur de garde (hg) entre l'interface entre les fluides de densité d1 et d2 et son extrémité supérieure. Partant, on peut régler avec précision la hauteur de fluide de surface que l'on souhaite laisser en surface du fluide principal. Généralement, la hauteur de fluide de surface restante est de l'ordre du centimètre au maximum.

Le niveau de garde est modulable selon que le fluide principal de densité d2 est animé ou non de mouvements de convection.

En effet, plus le fluide principal sera agité (respectivement calme), plus le moyen de réglage 310 sera dévissé (respectivement vissé) afin d'établir un niveau de garde plus ou moins important.

Le moyen de réglage 310 est réalisé en aluminium ou en acier inoxydable.

Le moyen de réglage 310 possède une forme tubulaire. Avantageusement, il est en outre muni à son extrémité supérieure, d'une pièce semi-circulaire 311 formant un bourrelet.

Le bourrelet 311 est réalisé à partir d'un demi-tube en aluminium ou en acier inoxydable rapporté sur le moyen de réglage par une opération de soudage.

Le moyen de réglage 310, plus particulièrement le bourrelet 311, permet de s'assurer qu'aucun volume de fluide de densité d2 ne soit recueilli durant l'opération d'écrémage.

Le bourrelet 311 forme obstacle à tout mouvement surfacique au niveau de l'interface entre les fluides de densité respectives d1 et d2 susceptible d'entraîner le débordement du fluide de densité d2 par-dessus le moyen de réglage, à l'intérieur des moyens de collecte 30.

Selon une alternative (non représentée), la surface interne des moyens de collecte 30 est filetée pour permettre la fixation et par suite le réglage du moyen de réglage 310.

Bien entendu, il est tout à fait envisageable de combiner les caractéristiques techniques du dispositif 10 représentées sur la Figure 1 avec celles du dispositif 10 représentées sur la Figure 2.

L'invention concerne également un procédé d'écrémage de réservoirs de stockage ou de process de fluides pétroliers ou chimiques utilisant le dispositif d'écrémage décrit ci-avant. Plus précisément, le procédé qui va être décrit concerne l'utilisation du dispositif 10 selon la variante de réalisation comportant un moyen d'obturation 50 de l'ouverture 31 des moyens de collecte 30.

Avant que ne débute l'opération d'écrémage du fluide de surface, les moyens de collecte 30 du dispositif 10 d'écrémage sont dans une première position dite « position haute » (ph). En position haute, le fluide de surface n'a pas encore été écrémé. A cet instant, le flotteur 51 du moyen d'obturation 50 flotte sur la surface du fluide de surface de densité d1 tandis que l'élément de guidage 52 est quant à lui immergé dans le fluide de surface.

Ensuite et pendant toute la durée de l'opération d'écrémage, le fluide de surface est recueilli par les ouvertures 520 de l'élément de guidage 52. Le fluide s'écoule alors au travers des moyens de collecte 30 jusque vers les moyens d'évacuation 40 afin d'être évacué à l'extérieur du réservoir de stockage vers un réservoir annexe.

Dans le même temps, l'élément de guidage 52 coulisse à l'intérieur de l'ouverture 31 des moyens de collecte 30 au fur et à mesure que la hauteur du fluide de densité d1 diminue jusqu'à ne plus former qu'un léger film d'ordre centimétrique.

L'épaisseur du film restante à la surface du fluide principal est contrôlable et ajustable. On ajuste l'épaisseur du film en fonction des possibles mouvements de convection par agitation du fluide de densité d2, cela afin d'éviter que le dispositif 10 d'écrémage ne recueille le fluide de densité d2.

Pendant l'écrémage, le dispositif 10 se déplace verticalement en suivant la diminution d'épaisseur de la couche de fluide de surface. Aussi, le dispositif 10 ne subit aucun déplacement horizontal, excepté dans le cas où le fluide principal, pour des raisons particulières, doit être animé d'un mouvement de convection par le biais d'un agitateur.

En fin d'opération d'écrémage, lorsque le fluide de surface a été écrémé et qu"il ne reste plus que le très léger film à la surface du fluide de densité d2 dans le réservoir de stockage, l'élément de guidage 52 du moyen d'obturation 50 se trouve alors dans une seconde position dite « position basse » (pb). En position basse, le fluide de surface a été écrémé.

En position basse, l'élément 52 ne coulisse plus dans l'ouverture 31 des moyens de collecte 30. Les ouvertures 520 sont obturées par les moyens de collecte 30.

Aussi, le flotteur 51 du moyen d'obturation 50 repose sur l'ouverture 31 des moyens de collecte 30 et en obture l'accès. Partant, on évite toute collecte de fluide dans les moyens de collecte 30. Ainsi, le dispositif 10 ne risque plus de recueillir accidentellement tout ou partie du fluide de densité d2.

En ce qui concerne les matériaux ayant servis à la fabrication du dispositif 10 d'écrémage selon l'invention, ceux-ci sont sélectionnés puis testés longuement lors de la phase de conception. Les tests permettent d'étudier leur résistance chimique à l'égard des fluides avec lesquels ils sont mis en contact ultérieurement.

Ces tests sont réalisés dans le but de fabriquer un dispositif 10 d'écrémage qui soit exempt de toute opération de maintenance.

Néanmoins, même s'il s'avère que ces matériaux possèdent une bonne compatibilité chimique avec les fluides testés, il est prévu la possibilité d'installer un système de surveillance tel que représenté sur les Figures 3 et 4, pour contrôler en temps réel leur vieillissement.

Le système de surveillance 1000 comprend un agencement de plusieurs moyens d'ouverture-fermeture 1001, 1002, 1003 et un analyseur 1004. Le fonctionnement du système 1000 sera décrit ci-après.

Le système de surveillance 1000 est un système en ligne installé en dehors de la cuve de stockage, au niveau de la sortie ménagée dans la partie basse de la cuve. Le système de surveillance est interposé entre la sortie de la cuve et le réservoir annexe ou le tout-à-l'égout.

Il permet une surveillance en continu, c'est-à-dire sans avoir besoin d'arrêter l'opération d'écrémage.

Les moyens d'ouverture-fermeture 1001, 1002, 1003 sont par exemple des vannes papillon, des vannes à boisseau, des vannes guillotine, etc. autorisant ou au contraire interdisant le passage du fluide de surface écrémé au cours de l'opération.

L'analyseur 1004 comporte un support compartimenté en une pluralité d'emplacements ei ; i=1...n. Les emplacements ei sont prévus pour accueillir au moins un échantillon (ou « coupon » en langue anglaise) ci du matériau à tester.

Le au moins un échantillon ci peut se présenter sous différentes formes. Il peut par exemple être prévu sous la forme d'une plaque, d'un disque, d'un cylindre, etc.

Le système de surveillance 1000 est destiné à surveiller la tenue chimique dans le temps des matériaux composant le dispositif 10, le dispositif étant destiné à rester à demeure dans la cuve de stockage qu'il y ait ou non besoin de procéder à une opération d'écrémage.

Plus précisément, on surveille la tenue chimique du matériau polymère constituant en partie les conduites flexibles 41,42 et qui est en contact permanent avec la couche de fluide de surface de densité d1 qui peut par exemple être une mousse formée par réaction entre le fluide principal de densité d2 et l'atmosphère gazeuse environnante.

En effet, le fluide de surface peut à plus ou moins long terme dégrader ses propriétés physico-chimique et mécanique, par réaction chimique. Cette réaction chimique entraîne alors le vieillissement naturel ou prématuré des conduites flexibles 41,42 et par conséquent elle nuit au bon déroulement de l'opération d'écrémage.

A cet effet, le système 1000 permet de suivre l'évolution au cours du temps du vieillissement du matériau polymère des conduites flexibles 41,42 par le biais de mesures quantitatives. Partant, il est possible de prédire avec précision le moment opportun à partir duquel on doit les remplacer.

La Figure 3 décrit le système de surveillance 1000 selon un premier mode de fonctionnement ou « mode service ».

Lorsque le système de surveillance 1000 est en « mode service », la vanne 1001 est en position fermée et les vannes 1002, 1003 sont en position ouverte. Ainsi, la vanne 1001 force le passage du fluide de surface évacué de la cuve de stockage au travers de l'analyseur 1004.

Le au moins un échantillon ci logé dans un des compartiments ei est alors mis en contact avec le fluide de surface. Ainsi, on entraîne le vieillissement du au moins un échantillon ci.

A l'inverse, la Figure 4 décrit le système de surveillance 1000 selon un deuxième mode de fonctionnement ou « mode analyse ».

Lorsque le système de surveillance 1000 est en « mode analyse », la vanne 1001 est en position ouverte et les vannes 1002, 1003 sont en position fermée. De la sorte, le fluide de surface évacué lors de l'opération d'écrémage part directement vers le réservoir annexe ou le tout-à-l'égout.

On utilise principalement le « mode analyse » lorsque l'on souhaite surveiller le vieillissement du au moins un échantillon ci disposé dans l'analyseur 1004. Tel que représenté sur la Figure 4, un au moins des échantillons (ou « coupon ») ci est extrait de son emplacement ei pour être analysé.

L'échantillon ci est analysé de manière quantitative. Par exemple, on mesure la perte de plastifiant et/ou la variation de viscosité entre l'échantillon à l'état initial,
c'est-à-dire avant tout contact avec le fluide de surface, et l'échantillon à l'instant t, après qu'il ait été exposé un certain nombre d'heures, de mois ou d'années au fluide de surface.

Ainsi, si l'on s'est fixé une perte de plastifiant et/ou une variation de viscosité maximale à partir de laquelle on estime que l'intégrité du matériau n'est plus suffisante et que cela porte atteinte au bon déroulement de l'opération d'écrémage, on procède alors au renouvellement des conduites flexibles 41,42.

Bien entendu, les modes de réalisation décrit précédemment ne sont donnés qu'à titre d'exemples non limitatifs. D'autres variantes d'exécution peuvent être réalisées sans pour autant sortir du cadre de l'invention.

A titre d'exemple il est tout à fait approprier d'utiliser le dispositif d'écrémage actuel décrit et revendiqué dans la présente demande pour une toute autre application connexe, en lien avec le domaine technique de son utilisation première.

En effet, dans le cas de réservoir de stockage à toit fixe contenant un fluide principal tel qu'un produit chimique ou pétrolier, une atmosphère environnante chargée en gaz inerte est située au-dessus du fluide principal.

Le gaz inerte est destiné à limiter les risques de combustion du produit chimique ou pétrolier en cas de formation d'un arc électrique entre un éclair de foudre et le réservoir de stockage. Partant, cela permet d'éviter que ne survienne une explosion et qu'un incendie ne se propage.

Ainsi, dans l'hypothèse où le fluide principal venait à prendre feu, le dispositif selon l'invention serait tout à fait capable de fonctionner à l'inverse de son fonctionnement usuel.

En effet, il est possible d'imaginer qu'un réservoir annexe contenant une mousse extinctrice sous pression soit raccordé à la sortie ménagée en partie basse du réservoir de stockage à toit fixe et donc aux conduites flexibles du dispositif d'écrémage.

Ainsi, en cas d'incendie, le dispositif d'écrémage est stoppé dans la réalisation de sa fonction usuelle et un mécanisme auxiliaire déclenche alors la libération de la mousse extinctrice sous pression.

La mousse extinctrice est alors propulsée au travers des conduites flexibles pour finalement être expulsée par les ouvertures prévues dans l'élément de guidage du moyen d'obturation du dispositif d'écrémage.

La mousse extinctrice est ainsi déposée rapidement et uniformément à la surface du fluide principal, contrairement à un dispositif classique d'injection de mousse depuis la partie haute de la cuve de stockage.

## Revendications

1. Dispositif (10) pour opération d'écrémage de réservoirs de stockage de fluides pétroliers ou chimiques fonctionnant par gravitation, le fluide pétrolier ou chimique possédant une densité d2 et étant recouvert d'un fluide de surface de densité d1 inférieure à d2, le dispositif comprenant :
- des moyens de flottaison (20) flottant au niveau de l'interface entre le fluide de densité d1 et le fluide de densité d2 ;
- des moyens de collecte (30) du fluide de surface à écrémer comportant une ouverture (31) débouchant au-dessus de l'interface entre le fluide de densité d1 et le fluide de densité d2, les moyens de collecte (30) étant reliés au moyens de flottaison (20), et des moyens de connexion (32) immergés dans le fluide de densité d2,; et,
- des moyens d'évacuation (40) du fluide de surface collecté, les moyens d'évacuation (40) étant connectés aux moyens de connexion (32) des moyens de collecte (30) et s'étendant verticalement dans le fluide de densité d2 vers le fond du réservoir,
**caractérisé en ce que** les moyens d'évacuation (40) comprennent au moins deux conduites flexibles (41,42) connectées symétriquement aux moyens de connexion (32),
et **en ce que** les au moins deux conduites flexibles (41, 42) sont agencées selon une configuration en lanterne chinoise.

2. Dispositif (10) selon la revendication 1, **caractérisé en ce qu'**il comporte un moyen de réglage (310) de la hauteur d'écrémage du fluide de surface de densité d1 par rapport à l'interface entre les fluides de densité d1 et d2, fixé au niveau de l'ouverture (31) des moyens de collecte (30).

3. Dispositif (10) selon la revendication 2, **caractérisé en ce que** le moyen de réglage (310) est fixé sur une surface externe des moyens de collecte (30).

4. Dispositif (10) selon la revendication 2, **caractérisé en ce que** le moyen de réglage est fixé sur une surface interne des moyens de collecte (30).

5. Dispositif (10) selon l'une quelconque des revendications précédentes, **caractérisé en ce qu'**il comporte un moyen d'obturation (50) de l'ouverture (31) des moyens de collecte (30).

6. Dispositif (10) selon la revendication 5, **caractérisé en ce que** le moyen d'obturation (50) comprend un flotteur (51) de diamètre supérieur au diamètre de l'ouverture (31) des moyens de collecte (30) flottant sur la surface du fluide de densité d1 et **en ce qu'**il comprend un élément de guidage (52) fixé sous le flotteur (51) apte à coopérer avec les moyens de collecte (30) et à coulisser verticalement à l'intérieur de l'ouverture (31) en suivant les variations de hauteur du fluide de surface lors de l'opération d'écrémage.

7. Dispositif (10) selon la revendication 6, **caractérisé en ce que** l'élément de guidage (52) du moyen d'obturation (50) comporte des ouvertures (520) pour collecter le fluide de surface de densité d1 à écrémer.

8. Procédé d'écrémage de réservoirs de stockage de fluides pétroliers ou chimiques utilisant le dispositif (10) selon la revendication 7 , **caractérisé en ce qu'**il comporte les étapes successives suivantes :
a) collecte du fluide de surface de densité d1 présent dans le réservoir au travers des ouvertures (520) de l'élément de guidage (52) du moyen d'obturation (50) et écoulement dudit fluide vers les moyens d'évacuation (40) ;
b) coulissement de l'élément de guidage (52) à l'intérieur de l'ouverture (31) entre une position haute (ph) où le fluide de surface n'a pas encore été écrémé et une position basse (pb) où le fluide de surface a été écrémé ; et,
c) obturation des ouvertures (520) de l'élément de guidage (52).

9. Procédé d'écrémage selon la revendication 8, **caractérisé en ce que** après l'étape c), le flotteur (51) repose sur l'ouverture (31) des moyens de collecte (30).

## Patentansprüche

1. Vorrichtung (10) für einen Arbeitsvorgang des Abschöpfens von Lagerbehälter für Erdöl- oder chemische Flüssigkeiten, die über Schwerkraft arbeitet, wobei die Erdöl- oder chemischen Flüssigkeiten eine Dichte d2 besitzen und von einer Oberflächenflüssigkeit der Dichte d1 kleiner als d2 bedeckt ist, wobei die Vorrichtung umfasst:
- Schwimmmittel (20), die auf der Höhe der Grenzfläche zwischen der Flüssigkeit der Dichte d1 und der Flüssigkeit der Dichte d2 schwimmen;
- Sammelmittel (30) der abzuschöpfenden Oberflächenflüssigkeit, die eine über der Grenzfläche zwischen der Flüssigkeit der Dichte d1 und der Flüssigkeit der Dichte d2 mündende Öffnung (31) aufweist, wobei die Sammelmittel (30) an die Schwimmmittel (20) und Verbindungsmittel (32) angeschlossen sind, die in der Flüssigkeit der Dichte d2 eingetaucht sind; und
- Austragmittel (40) der gesammelten Oberflächenflüssigkeit, wobei die Austragmittel (40) mit den Verbindungsmitteln (32) der Sammelmittel (30) verbunden sind und sich vertikal in der Flüssigkeit der Dichte d2 zu dem Boden des Behälters erstrecken,
**dadurch gekennzeichnet, dass** die Austragmittel (40) mindestens zwei flexible Leitungen (41, 42) umfassen, die symmetrisch mit den Verbindungsmitteln (32) verbunden sind,
und dass die mindestens zwei flexiblen Leitungen (41, 42) gemäß einer Konfiguration einer chinesischen Laterne ausgebildet sind.

2. Vorrichtung (10) nach Anspruch 1, **dadurch gekennzeichnet, dass** sie ein Mittel (310) zum Einstellen der Abschöpfhöhe der Oberflächenflüssigkeit der Dichte d1 in Bezug auf die Grenzfläche zwischen den Flüssigkeiten der Dichte d1 und d2 aufweist, wobei das Mittel an der Öffnung (31) der Sammelmittel (30) befestigt ist.

3. Vorrichtung (10) nach Anspruch 2, **dadurch gekennzeichnet, dass** das Einstellmittel (310) an der Außenfläche der Sammelmittel (30) befestigt ist.

4. Vorrichtung (10) nach Anspruch 2, **dadurch gekennzeichnet, dass** das Einstellmittel an einer Innenfläche der Sammelmittel (30) befestigt ist.

5. Vorrichtung (10) nach einem beliebigen der vorhergehenden Ansprüche, **dadurch gekennzeichnet, dass** sie ein Mittel (50) zum Verschlie-ßen der Öffnung (31) der Sammelmittel (30) aufweist.

6. Vorrichtung (10) nach Anspruch 5, **dadurch gekennzeichnet, dass** das Verschließmittel (50) einen auf der Fläche der Flüssigkeit der Dichte d1 schwimmenden Schwimmer (51) mit einem Durchmesser größer als der Durchmesser der Öffnung (31) der Sammelmittel (30) umfasst und dass sie ein Führungselement (52) umfasst, das unter dem Schwimmer (51) befestigt ist und geeignet ist, mit den Sammelmitteln (30) zusammenzuarbeiten und vertikal ins Innere der Öffnung (31) zu gleiten, wobei es den Änderungen der Höhe der Oberflächenflüssigkeit bei dem Abschöpfvorgang folgt.

7. Vorrichtung (10) nach Anspruch 6, **dadurch gekennzeichnet, dass** das Führungselement (52) des Verschließmittels (50) Öffnungen (520) zum Sammeln der abzuschöpfenden Oberflächenflüssigkeit der Dichte d1 aufweist.

8. Verfahren zum Abschöpfen von Lagerbehältern für Erdöl- oder chemische Flüssigkeiten unter Verwendung der Vorrichtung (10) nach Anspruch 7, **dadurch gekennzeichnet, dass** es die folgenden aufeinanderfolgenden Schritte aufweist:
a) Sammeln der Oberflächenflüssigkeit der Dichte d1, die in dem Behälter vorhanden ist, durch die Öffnungen (520) des Führungselements (52) des Verschließmittels (50) und Leiten der Flüssigkeit zu den Austragmitteln (40);
b) Verschieben des Führungselements (52) im Inneren der Öffnung (31) zwischen einer hohen Position (ph), in der die Oberflächenflüssigkeit noch nicht abgeschöpft wurde, und einer unteren Position (pb), in der die Oberflächenflüssigkeit abgeschöpft wurde; und
c) Verschließen der Öffnung (520) des Führungselements (52).

9. Abschöpfverfahren nach Anspruch 8, **dadurch gekennzeichnet, dass** nach dem Schritt c) der Schwimmer (51) auf der Öffnung (31) der Sammelmittel (30) ruht.

## Claims

1. A device (10) for skimming petrochemical or chemical fluid storage tanks working by gravitation, the petrochemical or chemical fluid having a density d2 and being covered by a surface fluid with a density d1 lower than d2, the device comprising:
- buoyancy means (20) floating at the interface between the fluid with density d1 and the fluid with density d2;
- means (30) for collecting surface fluid to be skimmed including an opening (31) emerging above the interface between the fluid with density d1 and the fluid with density d2, the collection means (30) being connected to the buoyancy means (20), and connection means (32) submerged in the fluid with density d2; and
- means (40) for discharging the collected surface fluid, the discharge means (40) being connected to the connection means (32) of the collecting means (30) and extending vertically in the fluid with density d2 toward the bottom of the tank,
**characterized in that** the discharge means (40) comprise at least two flexible pipes (41, 42) connected symmetrically to the connection means (32),
and **in that** the at least two flexible pipes (41, 42) are arranged in a Chinese lantern configuration.

2. The device (10) according to claim 1, **characterized in that** it includes means (310) for adjusting the skimming height of the surface fluid with density d1 relative to the interface between the fluids with density d1 and d2 fastened at the opening (31) of the collecting means (30).

3. The device (10) according to claim 2, **characterized in that** the adjusting means (310) is fastened on an outer surface of the collecting means (30).

4. The device (10) according to claim 2, **characterized in that** the adjusting means is fastened on an inner surface of the collecting means (30).

5. The device (10) according to any one of the preceding claims, **characterized in that** it includes a closing off means (50) for closing off the opening (31) of the collecting means (30).

6. The device (10) according to claim 5, **characterized in that** the closing off means (50) comprises a float (51) with a diameter larger than the diameter of the opening (31) of the collecting means (30) floating on the surface of the fluid with density d1 and **in that** it comprises a guide element (52) fastened below the float (51) able to cooperate with the collecting means (30) and to slide vertically inside the opening (31), following the height variations of the surface fluid during the skimming operation.

7. The device (10) according to claim 6, **characterized in that** the guide element (52) of the closing off means (50) include openings (520) to collect the surface fluid with density d1 to be skimmed.

8. A method for skimming a petrochemical or chemical fluid storage tank using the device (10) according to claim 7, **characterized in that** it includes the following successive steps:
a) collecting surface fluid with density d1 present in the tank through openings (520) of the guide element (52) using the closing off means (50) and causing the flow of said fluid in the discharge means (40);
b) sliding of the guide element (52) inside the opening (31) between a high position (ph) where the surface fluid has not yet been skimmed and a low position (pb) where the surface fluid has been skimmed; and
c) closing off the openings (520) of the guide element (52).

9. The skimming method according to claim 8, **characterized in that** after step c), the float (51) rests on the opening (31) of the collecting means (30).
